# DEMANDE DE BREVET EUROPEEN

(11) **EP 1 873 585 A2**
(43) Date de publication de la demande: **02.01.2008**
(21) Numéro de dépôt: 07110180.2
(22) Date de dépôt: 13.06.2007
(51) Int. Cl.: G03B 21/58

(54) **Ecran de projection enroulable**

(30) Priorité: 15.06.2006 FR 0605307
(71) Demandeur: U.SEE Ltd, Ely, Cambridgeshire CB7 4AH (GB)
(72) Inventeur: Buton, Daniel, 93370, MONTFERMEIL (FR); Charrier, Jean-Pierre, 92310, SEVRES (FR); Congard, Patrice François Bernard, 75020, PARIS (FR)
(74) Mandataire: Thévenet, Jean-Bruno

(57) **Abrégé**

L'écran de projection frontale (10) comporte une couche de support (13), de couleur sensiblement noire, enroulée sur un tube d'enroulement (11) et comprenant un lest à son bord inférieur, et une surface de projection (12) sensiblement blanche ou gris clair de taille plus petite et moins large que ladite couche de support (13), fixée à la couche de support par une jonction à son bord supérieur et sur la face de l'écran destinée à recevoir la projection.

## Description

Le domaine de la présente invention est celui des écrans de projection d'images, notamment vidéo. Plus précisément, il s'agit des écrans de projection dite frontale, à partir d'un projecteur se trouvant du même côté de la surface de projection que les spectateurs. Plus précisément, il s'agit de celui des écrans escamotables par enroulement. Les écrans enroulables sont généralement constitués d'une surface de projection rectangulaire en matériau souple, textile ou plastique, de couleur blanche ou gris clair, fixée par un bord à un tube d'enroulement. Le bord opposé au bord de fixation est généralement lesté, afin de procurer une tension à la surface de projection lorsqu'elle est déroulée par rotation du tube d'enroulement.

Une telle tension est nécessaire d'une part pour permettre un enroulement de la surface de projection autour du tube d'enroulement, et d'autre part pour que la surface de projection soit plane lorsqu'elle est déroulée, ce qui est une condition nécessaire à l'obtention d'une projection de bonne qualité.

Cette condition de planéité n'est que partiellement satisfaite par une telle solution, puisque la seule force exercée sur la surface de projection par le lest est de direction verticale. Il en résulte généralement que si la surface de projection déroulée est approximativement plane, elle présente dans le détail deux types de déformations: soit un renflement dans la zone médiane basse, soit une déformation des bords en arc de cercle.

Si de telles déformations sont considérées comme acceptables pour de nombreuses applications, elles ne le sont pas pour certaines autres applications, notamment à usage domestique, nécessitant un haut niveau de qualité d'image.

Des dispositifs aptes à exercer une tension latérale sur des surfaces de projection enroulables sont connus. Ils consistent généralement en des pattes d'attache disposées suivant un pas prédéterminé sur les bords latéraux de la surface de projection. Ces pattes sont reliées à deux fils tendus, respectivement de chaque côté de l'écran. Les fils sont eux-mêmes tendus par traction verticale à l'aide d'une barre horizontale servant simultanément de lest à la surface de projection, afin de fournir la tension verticale nécessaire.

Les inconvénients d'un tel dispositif sont connus. Ces dispositifs de mise en tension latérale sont coûteux à fabriquer, requérant souvent un réglage manuel. Ils sont de plus inesthétiques, impliquant souvent une découpe en arc de cercle des bords latéraux de l'écran. Par ailleurs, Ils nécessitent que le tube d'enroulement soit sensiblement plus large que la surface de projection utile. Enfin, ils interdisent ou rendent difficile une modification du réglage de fin de course d'enroulement, déterminant la hauteur du bord inférieur de la surface de projection, et donc la position verticale de ladite surface.

Par ailleurs, un autre défaut affecte souvent la qualité de l'image projetée sur un écran enroulable. L'environnement de l'écran étant variable, il se trouve que souvent une surface claire se trouve derrière l'écran. Cette surface réfléchit partiellement de la lumière en provenance de l'image projetée, par transparence de l'écran. Ceci est particulièrement évident lorsque l'écran est perforé ou tissé, de manière à être perméable au son. La lumière ainsi réfléchie vient à nouveau par transparence se superposer à l'image projetée, la parasitant, et en réduit ainsi la netteté.

Pour éviter ce phénomène on utilise couramment un revêtement de couleur noire sur la face arrière de l'écran, qui absorbe ainsi la lumière réfléchie par une paroi située derrière l'écran. Un tel revêtement est cependant particulièrement difficile à mettre en oeuvre et coûteux lorsque l'écran est perforé ou tissé. En effet, il est difficile de peindre en noir une seule face d'une surface poreuse sans modifier l'aspect de l'autre face, ladite autre face devant impérativement rester blanche ou gris clair. Une solution connue consiste à enrouler simultanément avec la surface de projection une deuxième couche noire ou gris très foncé dite d'occultation, généralement réalisée en un matériau similaire à la surface de projection et offrant une perméabilité équivalente aux ondes sonores. Cette couche se trouve disposée en arrière de la surface de projection lorsque l'écran est déroulé. Le surcoût est important.

Une caractéristique souhaitable des écrans destinés à la projection vidéo de qualité est l'encadrement de la surface de projection par une bordure noire, ce qui a pour effet de renforcer la perception du contraste de l'image. La réalisation d'une telle bordure noire, généralement réalisée par peinture des bords de la surface de projection, a pour inconvénient le surcoût entraîné par sa réalisation.

Un premier objet de la présente invention est de proposer un écran de projection enroulable présentant une grande planéité une fois déroulé, sans mettre en oeuvre de dispositif de mise en tension latérale.

Un deuxième objet de la présente invention est de proposer un écran enroulable comportant une couche d'occultation n'entraînant pas un surcoût lors de la fabrication équivalent au doublement de la surface de projection

Un troisième objet de la présente invention est de proposer un écran comportant un encadrement noir de la surface de projection n'entraînant aucun surcoût.

Plus en détail,

Un écran de projection frontale selon la présente invention comporte une couche dite de support, de couleur sensiblement noire, enroulée sur un tube d'enroulement et comprenant un lest à son bord inférieur, et

Une surface de projection sensiblement blanche ou gris clair de taille plus petite que ladite couche de support, fixée à la couche de support par son bord supérieur et sur la face destinée à recevoir la projection.

De préférence, la couche de support et la surface de projection sont jointes par une jonction s'étendant sur la largeur du bord supérieur de la surface de projection.

Le positionnement de la surface de projection par rapport à la couche de support est tel que le bord inférieur de celle-ci se trouve sensiblement plus bas que le bord inférieur de la surface de projection quand l'écran est déroulé.

La couche de support est également sensiblement plus haute que la surface de projection, de manière que seule ladite couche de support connecte l'écran de projection avec le tube d'enroulement quand ledit écran est déroulé.

Par ailleurs, ladite surface de projection est moins large que la couche de support.

Ces trois dernières caractéristiques permettent d'utiliser la couche d'occultation pour encadrer visuellement la surface de projection, rempiaçant avantageusement un bord noir peint sur la périphérie de la surface de projection.

De préférence, ladite surface de projection a sensiblement les dimensions de l'image que l'on souhaite projeter sur l'écran.

De préférence, la couche de support et la surface de projection comportent chacune un lest s'étendant sur toute leur largeur respective.

De préférence, ladite surface de projection comporte un lest de masse inférieure à celle du lest de ladite couche de support.

De préférence, le lest de la surface de projection a une longueur sensiblement égale à la largeur du bord inférieur de la surface de projection, et présente une section transversale oblongue, constante sur toute sa longueur et d'une épaisseur inférieure à trois millimètres.

Ainsi, le lest de la surface de projection n'occasionne pas de déformation significative de la couche de support.

De préférence, la couche de support comporte au moins un enroulement autour du tube lorsque l'écran est en position déroulée et une zone d'amorce se trouvant au dessus de la jonction par laquelle la couche de support et la surface de projection sont reliées.

Ladite zone d'amorce permet ainsi de régler la hauteur de la surface de projection par réglage d'une fin de course de déroulement de l'écran.

Les objets, caractéristiques et avantages de l'invention ressortent de la description donnée ci-dessous d'un mode de réalisation de l'invention donné à titre d'exemple illustratif non limitatif en regard des dessins annexés sur lesquels :
la Figure 1 est une vue générale en perspective d'un écran de projection selon l'invention, vue du côté de la projection, l'écran étant en position partiellement enroulée.
la Figure 2 est une vue en élévation frontale d'une surface de projection montée sur une couche de support selon l'invention,
la Figure 3 est une vue en élévation latérale d'un écran de projection selon l'invention,
la Figure 4 est une vue d'un détail de la Figure 3,
la Figure 5 est une vue globale en perspective d'un écran de projection selon l'invention, vue du côté de la projection, en position totalement déroulée.
la Figure 6 est une vue élévation frontale d'une surface de projection montée sur une couche de support selon l'invention selon une variante d'exécution de l'invention,
la Figure 7 est une vue en élévation latérale d'une variante d'exécution de l'invention correspondant à la Figure 6, et
la Figure 8 est une vue en coupe transversale d'une variante d'exécution de l'invention.

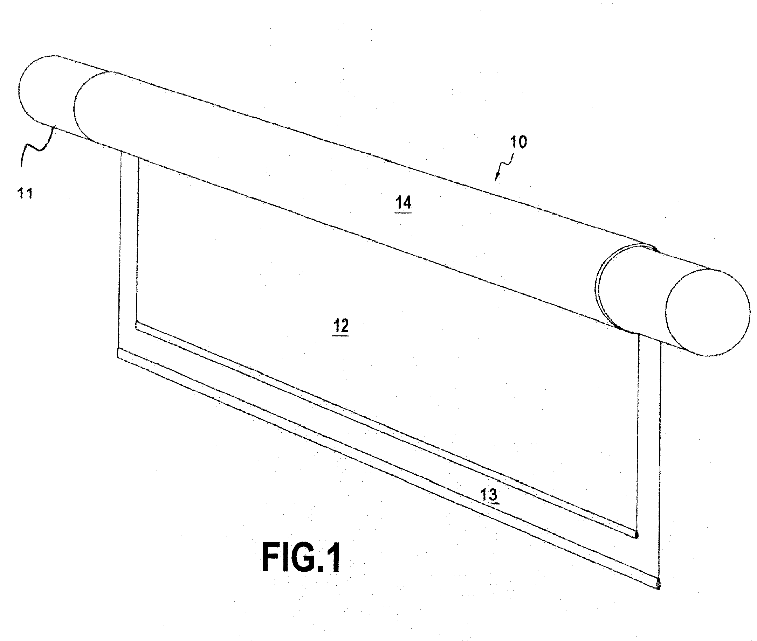

Plus en détail, et en référence à la Figure 1, un écran de projection 10 selon l'invention est partiellement enroulé autour d'un tube d'enroulement 11. Globalement, l'écran 10 comprend une surface de projection 12 constituée d'une feuille mince d'un matériau souple.

En arrière de la surface de projection 12 se trouve une couche dite de support 13, se trouvant dans un plan parallèle et adjacent au plan dans lequel se trouve la surface de projection 12.

La couche de support 13 est également constituée d'une feuille mince d'un matériau souple. La couche de support 13 est, dans le mode de réalisation présenté à titre d'exemple, mais de façon non limitative, plus grande que la surface de projection 12.

A la Figure 1, une partie 14 de l'écran de projection est enroulée, la couche de support 13 et la surface de projection 12 étant superposées, de manière qu'elles sont enroulées ensemble autour du tube d'enroulement 11.

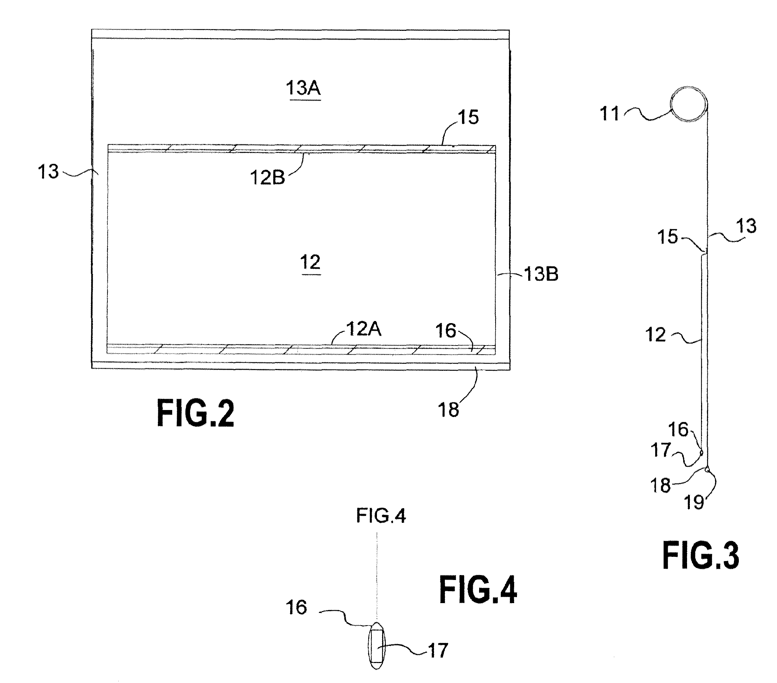

Les Figures 2 et 3 présentent l'ensemble constitué par la surface de projection 12 et la couche de support 13, l'ensemble étant déroulé. Comme le montre la Figure 2, les deux couches sont rectangulaires, et sont disposées de manière que leurs bords sont parallèles.

On notera qu'à la Figure 3, la surface de projection 12 est représentée nettement séparée de la couche de support 13. Ceci est uniquement destiné à rendre le dessin compréhensible, car en pratique, la surface de projection 12 étant suspendue par la jonction 15 est en contact avec la couche de support 13.

La couche de support 13 se trouve en arrière de la surface de projection 12. Elle est sensiblement plus grande que cette dernière, et comporte deux parties:

Une partie dite haute, 13A, et une partie dite basse 13B.

La surface de projection 12 est superposée à la partie basse 13B de la couche de support à laquelle elle est reliée par une jonction 15. Cette jonction 15 s'étend sur toute la largeur du bord supérieur de la surface de projection 12.

La jonction 15 peut être indifféremment une couture, un collage, un rivetage ou une soudure suivant les matériaux constituant respectivement la couche de support 13 et la surface de projection 12.

La jonction 15 est la seule liaison mécanique reliant le support 13 et la surface de projection 12, la surface et les trois autres bords de la surface de projection 12 étant libres.

Dans le mode de réalisation décrit à titre d'exemple, les matériaux constituant la couche de support 13 et la surface de projection 12 sont similaires, bien que cette caractéristique ne soit pas limitative.

Il peut s'agir, par exemple, d'un tissu, mais d'autres matériaux peuvent être envisagés, tels qu'une feuille de PVC ou d'un autre matériau plastique.

Selon un mode de réalisation préférentiel, Le matériau constituant la surface de projection 12 est un tissu réalisé à partir de fil composite comprenant une âme en fibre de verre gainée de PVC.

La couche de support 13 est, de préférence, sensiblement noire.

La surface de projection 12 peut être soit sensiblement blanche, soit grise, suivant les besoins de la projection.

De préférence, l'épaisseur dudit matériau constituant la surface de projection 12 n'excède pas 1mm.

Avantageusement, le matériau constituant la couche de support 13 est au moins aussi épais que la surface de projection 12.

Dans l'exemple décrit, le matériau constituant la couche de support 13 est le même que celui constituant la surface de projection 12.

De préférence, les matériaux constituant la couche de support 13 et la surface de projection 12 sont, dans leur aspect fini, perméables à l'air.

Le bord inférieur de la surface de projection 12, c'est-à-dire le bord opposé à la jonction 15, est muni d'un ourlet 16 s'étendant sur toute la largeur de ladite surface de projection. Un jonc métallique 17 de section rectangulaire s'étendant sur toute la largeur de la surface de projection 12 se trouve dans l'ourlet 16.

En référence à la Figure 4, l'ourlet 16 est réalisé par un repli du bord inférieur de la surface de projection 12, ledit repli étant fixé par couture, rivetage, collage, soudure ou tout moyen approprié à la face arrière de ladite surface de projection.

De façon similaire, le bord inférieur de la couche de support 13, c'est-à-dire le bord de la couche de support 13 se trouvant le plus proche du bord inférieur de la surface de projection 12, est muni d'un ourlet 18 s'étendant sur toute la largeur de la couche de support. Dans l'ourlet 18 se trouve un jonc métallique 19 s'étendant sur toute la largeur de l'ourlet 18.

On notera que les joncs 17 et 19 ont respectivement une section transversale constante. Néanmoins, la section transversale du jonc 17 peut être différente de celle du jonc 19, aussi bien par la surface que par la forme.

Dans un mode préférentiel de réalisation, le jonc 17 présente une section transversale oblongue d'une épaisseur comprise entre 2 et 3 mm et une hauteur comprise entre 10 et 20 mm.

De préférence, la section transversale du jonc 19 est supérieure à celle du jonc 17.

Dans un mode préférentiel de réalisation, le jonc 19 est une tige d'acier d'un diamètre de 15 mm.

Les joncs 17 et 19 servent de lest afin d'exercer une tension verticale respectivement sur la surface de projection 12 et sur la couche de support 13 lorsque celles-ci sont déroulées.

Dans d'autres variantes de réalisation, on peut envisager diverses sortes de lests pour exercer une tension verticale respectivement sur la surface de projection 12 et la couche de support 13, sans sortir du cadre de l'invention. Notamment, on peut envisager que les lests soient fixés directement sur les bords de la surface de projection et de la couche de support, respectivement.

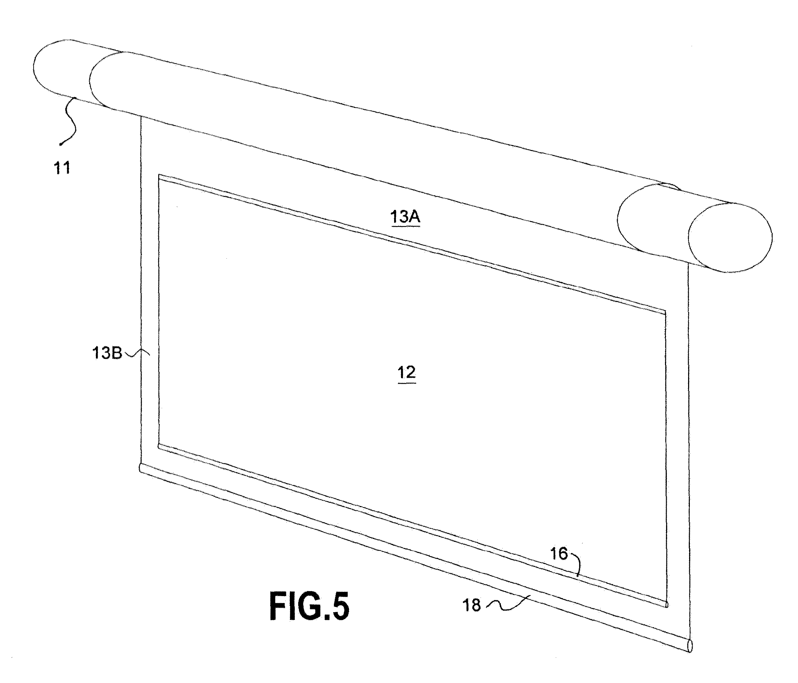

Dans le mode de réalisation décrit à titre d'exemple, en référence à la Figure 5., la couche de support 13 est un peu plus large que la surface de projection 12, et la partie inférieure 13B s'étendant vers le bas à partir de la jonction 15 est un peu plus haute que la surface de projection 12, de sorte que, en regardant l'écran de face en cours de projection, la couche de support 13 semble encadrer la surface de projection d'un cadre de largeur comprise entre 5 et 10 cm. sur trois côtés, tandis que la partie haute de ce qui apparaît comme un cadre sensiblement noir est une zone d'amorce de la partie 13A dont la hauteur visible dépend de l'enroulement autour du tube 11.

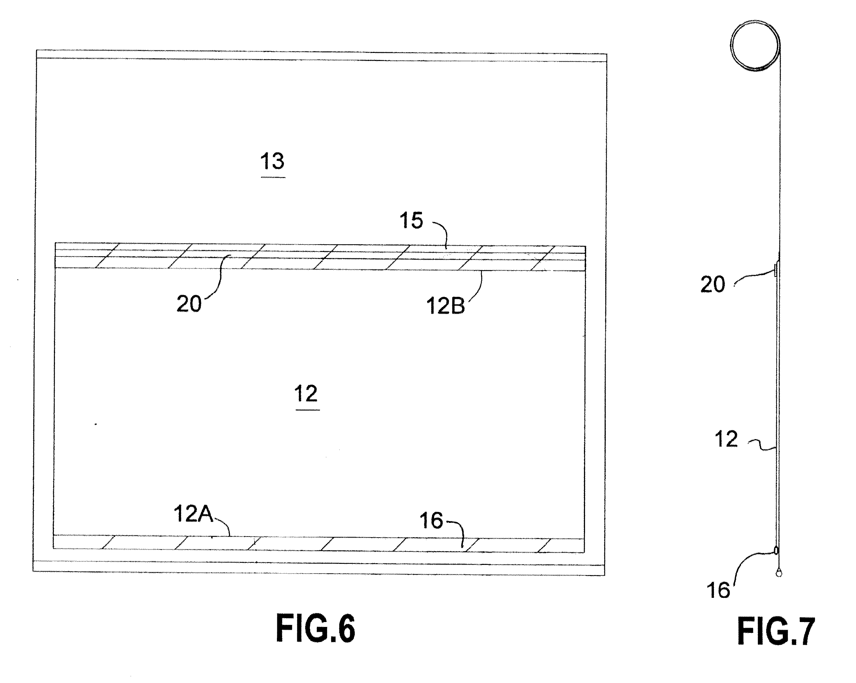

De préférence, une bande inférieure 12A (représentée hachurée aux Figures 2 et 6) de la surface de projection 12 sera peinte dans une couleur aussi proche que possible de la couleur de la couche de support 13, ladite bande s'étendant sur toute la largeur de la surface de projection 12 et d'une largeur sensiblement égale ou très légèrement supérieure à celle de l'ourlet 16. Ainsi, la bande 12A, d'une couleur sensiblement noire, délimite l'extrémité inférieure de la zone de projection de manière que l'ourlet 16 se trouve en dehors de ladite zone de projection.

De façon similaire, une bande supérieure 12B (représentée hachurée aux Figures 2 et 6) de la surface de projection 12 sera peinte dans une couleur aussi proche que possible de la couleur de la couche de support 13, ladite bande s'étendant sur toute la largeur de la surface de projection 12 et d'une largeur sensiblement égale ou très légèrement supérieure à celle de la jonction15.

Les bandes 12A et 12B délimitent ladite zone de projection, permettant ainsi que toutes les inégalités visibles dans la surface de projection 12 ne reçoivent pas l'image projetée lorsque l'écran est en cours d'utilisation. De plus, la couleur des bandes 12A et 12B étant très proche de la couleur de la couche de support 13, elle est sensiblement noire, ce qui a pour effet de masquer les inégalités d'aspect dues à la jonction 15 et à l'ourlet 16.

Avantageusement, le tube 11 est muni d'un dispositif d'entraînement en rotation (non représenté) comportant deux fins de course réglables, afin de pouvoir régler d'une part une position dite haute totalement enroulée dans laquelle la couche de support 13 et la surface de projection 12 sont enroulées ensemble jusqu'à une position où l'ourlet 18 devient tangent aux enroulements de la couche de support 13 et la surface de projection 12, et, d'autre part, une position dite basse dans laquelle la surface de projection est totalement visible et est suspendue par la jonction 15, la partie supérieure 13A de la couche de support 13 étant partiellement visible et partiellement enroulée autour du tube 11.

Seule la couche de support 13 est directement fixée au tube 11 par une bande adhésive 20 ou un collage s'étendant sur toute la largeur de la couche de support 13 à son bord supérieur (Figure 2).

La couche de support 13 est toujours enroulée d'au moins un tour autour du tube 11, même en position dite basse (Figure 5), de manière que la force de traction verticale exercée par le poids de l'écran et des lests ne s'exerce pas directement sur la fixation de la couche de support 13 au tube 11.

Suivant une variante d'exécution de l'invention représentée aux Figures 6, 7 et 8, un élément raidisseur 20, constitué d'un profil plat s'étendant sur toute la largeur de la surface de projection 12 est fixé à la surface de projection 12 dans une position parallèle à la jonction 15 et à proximité de celle-ci. Un tel élément raidisseur 20 peut être fixé soit sur la surface de projection, ou encore en dessous de ladite surface, c'est-à-dire entre la surface de projection 12 et la couche de support 13.

L'élément raidisseur 20 peut être une tige métallique, ou encore en matière plastique. Avantageusement, son épaisseur sera de l'ordre de 1mm, bien que ceci ne soit pas limitatif. La largeur de l'élément raidisseur sera, par exemple, de 10 mm, bien que ceci ne soit pas limitatif.

La fixation de l'élément raidisseur 20 à la surface de projection 12 peut se faire, par exemple, par collage, ou tout autre moyen approprié.

Dans la variante d'exécution décrite, la bande 12B est étendue dans sa hauteur de manière à recouvrir à la fois la jonction 15, l'élément raidisseur 20 et l'espace séparant la jonction 15 de l'élément raidisseur 20. De la sorte, la différence d'aspect entre la surface de projection 12 et l'élément raidisseur 20 se trouve en dehors de la zone de projection. De plus, cette différence est masquée par la couleur sensiblement noire de la bande 12B.

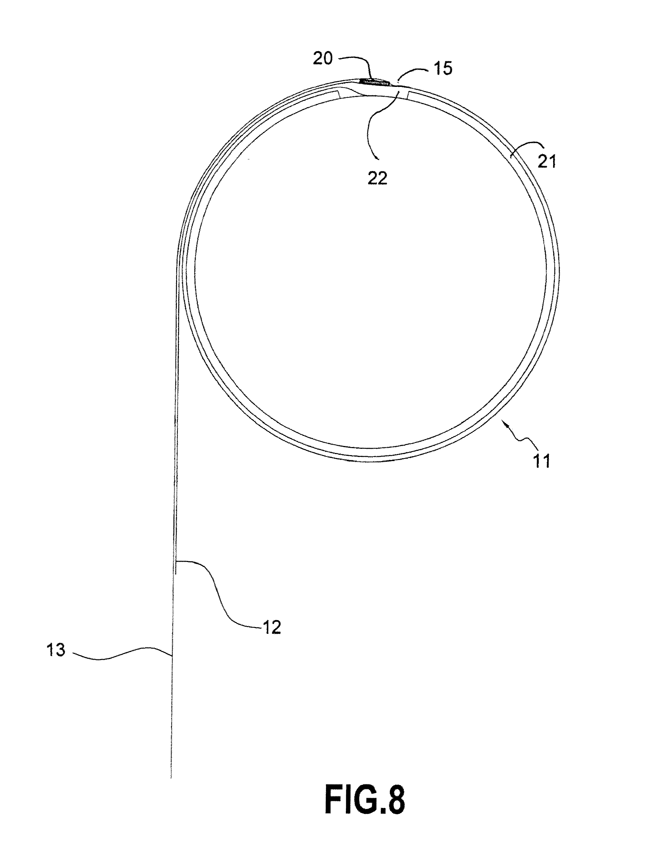

De préférence, en référence à la Figure 8, un manchon 21 entoure le tube d'enroulement et s'étend sur toute la longueur du tube, ou au moins sur une longueur axiale du tube égale à la largeur de la couche de support 13. Le manchon 21 présente une épaisseur sensiblement égale ou légèrement supérieure à l'épaisseur combinée de la jonction 15 et de l'élément raidisseur 20. Ce manchon est interrompu sur une partie de son périmètre, de manière à définir un logement 22. Le logement 22 s'étend axialement le long du tube 11.

Le logement 22 se trouve dans une position angulaire telle que la jonction 15 et l'élément raidisseur 20 prennent place dans le logement 22 lors de l'enroulement de l'écran. Le logement 22 est ainsi apte à compenser le surcroît d'épaisseur apporté par la jonction 15 et l'élément raidisseur 20.De la sorte, on évite que l'épaisseur combinée de la jonction 15 et de l'élément raidisseur 20 ne marque la toile 12 et la couche de support 13 à chaque tour lors de l'enroulement.

Le mode de réalisation donné dans la présente description est un exemple non-limitatif de l'invention, qui est définie par les revendications ci-après.

## Revendications

1. Ecran de projection frontale (10),
**caractérisé en ce qu'**il comporte une couche dite de support (13), de couleur sensiblement noire, enroulée sur un tube d'enroulement (11) et comprenant un lest (19) à son bord inférieur, et
une surface de projection (12) sensiblement blanche ou gris clair de taille plus petite et moins large que ladite couche de support (13), fixée à la couche de support par une jonction (15) à son bord supérieur et sur la face de l'écran destinée à recevoir la projection.

2. Ecran de projection selon la revendication 1, **caractérisé en ce que** ladite jonction (15) s'étend sur toute la largeur du bord supérieur de la surface de projection (12).

3. Ecran de projection selon la revendication 1, **caractérisé en ce que** le positionnement de la surface de projection (12) par rapport à la couche de support (13) est tel que le bord inférieur de celle-ci se trouve sensiblement plus bas que le bord inférieur de la surface de projection (12) quand l'écran (10) est déroulé.

4. Ecran de projection selon la revendication 1, **caractérisé en ce que** la couche de support 13 est sensiblement plus haute que la surface de projection (12), de manière que seule ladite couche de support (13) connecte l'écran de projection (10) avec le tube d'enroulement (11) quand ledit écran (10) est déroulé.

5. Ecran de projection selon la revendication 1, **caractérisé en ce qu'**une zone de projection est délimitée sur ladite surface de projection (12) par deux bandes horizontales (12A) et (12B) se trouvant respectivement en bas et en haut de ladite surface de projection, et par les bords latéraux de la surface de projection(12).

6. Ecran de projection selon la revendication 1, **caractérisé en ce que** la couche de support (13) et la surface de projection (12) comportent chacune un lest s'étendant sur toute leurs largeurs respectives.

7. Ecran de projection selon la revendication 6, **caractérisé en ce que** ladite surface de projection (12) comporte un lest (17) de masse inférieure à celle du lest (19) de ladite couche de support (13).

8. Ecran de projection selon l'une quelconque des revendications 6 et 7, **caractérisé en ce que** le lest (17) de la surface de projection (12) a une longueur sensiblement égale à la largeur du bord inférieur de la surface de projection (12), et présente une section transversale oblongue, constante sur toute sa longueur et d'une épaisseur ne dépassant pas trois millimètres.

9. Ecran de projection selon l'une quelconque des revendications précédentes, **caractérisé en ce que** la surface de projection (12) est munie d'un élément raidisseur (20) s'étendant sur toute la largeur de ladite surface de projection (12).

10. Ecran de projection selon la revendication 9, **caractérisé en ce qu'**un manchon (21) est prévu entourant le tube (11), ledit manchon (21) étant interrompu sur une partie de son périmètre de manière à définir un logement (22) s'étendant axialement le long du tube (11), ledit logement (22) étant apte à compenser le surcroît d'épaisseur apporté par la jonction (1) et l'élément raidisseur (20).
